# EUROPÄISCHE PATENTSCHRIFT

(11) **EP 1 374 189 B1**
(45) Veröffentlichungstag und Bekanntmachung des Hinweises auf die Patenterteilung: **23.02.2005**
(21) Anmeldenummer: 01976186.5
(22) Anmeldetag: 04.09.2001
(51) Int. Cl.: G07F 7/00

(54) **VERFAHREN ZUM SICHERN VON DIGITALEN WAREN BEIM VERKAUF ÜBER EIN COMPUTERNETZWERK**
METHOD FOR SECURING DIGITAL GOODS ON SALE THEREOF OVER A COMPUTER NETWORK
PROCEDE POUR SECURISER DES PRODUITS NUMERIQUES LORS D'UN ACHAT SUR UN RESEAU INFORMATIQUE

(30) Priorität: 06.09.2000 DE 10044139
(43) Veröffentlichungstag der Anmeldung: 02.01.2004
(73) Patentinhaber: Giesecke & Devrient GmbH, 81677 München (DE)
(72) Erfinder: GRÜNZIG, Stefan, D-85402 Kranzberg (DE); SCHEYBANI, Tschangiz, D-81675 München (DE)
(86) Internationale Anmeldenummer: PCT/EP2001/010171
(87) Internationale Veröffentlichungsnummer: WO 2002/021462

(56) Entgegenhaltungen:
- EP-A- 0 843 449
- EP-A- 0 864 959
- EP-A- 0 989 710
- WO-A-00/49786
- WO-A-98/02852
- WO-A-99/57663
- US-A- 6 112 078

## Beschreibung

Die Erfindung betrifft ein Verfahren zum Sichern von digitalen Waren beim Verkauf über ein Computemetzwerk, beispielsweise im Internet oder auch in einem größeren organisationsinternen Intranet, bei dem die Ware unter Nutzung eines symmetrischen Verschlüsselungsverfahrens mit einem Schlüssel verschlüsselt wird, die verschlüsselte Ware an einen Computer eines Kunden über das Computernetzwerk übermittelt wird und dort mittels des Schlüssels wieder entschlüsselt wird.

Digitale und digitalisierbare Waren wie Dokumente, Musik oder Software können heutzutage problemlos in sogenannten Internet-Shops erworben werden. Hierbei werden diese Waren nicht nur über das Internet bestellt, sondern auch die Übergabe der Waren an den Kunden kann direkt über das Internet erfolgen, indem die Ware auf einen Computer des Kunden heruntergeladen wird. Um für den Verkäufer eine Bezahlung der Ware sicherzustellen, erfolgt in der Regel das Herunterladen der Ware auf den Computer des Kunden vom Server erst nach Eingabe einer Kreditkarten-Nummer. Über die entsprechende Kreditkarte des Kunden wird dann die Zahlung durchgeführt. Die Kreditkarten-Nummer muss entweder einmalig bei einer Registrierung beim ersten Einkauf des Kunden dem jeweiligen, Verkäufer angegeben werden, oder sie wird bei jedem Einkauf neu abgefragt. Da es sich insbesondere beim Internet um ein relativ transparentes, ungesichertes Netz handelt, ist nicht auszuschließen, dass die Kreditkarten-Nummer und die Anschrift des Kunden während der Übermittlung unbefugten Dritten bekannt werden und dann von diesen missbraucht werden können. Dies hält viele potentielle Nutzer davon ab, Intemet Shops zu nutzen.

In der US 5,809,144 wird ein Verfahren zum Verkauf und zur Lieferung digitaler Waren im Internet vorgeschlagen, bei dem die Waren verschlüsselt an Kunden geliefert werden und nach einem entsprechenden, ebenfalls verschlüsselten Zahlungsauftrag der zur Entschlüsselung der digitalen Waren benötigte Schlüssel an den Kunden über denselben Weg übermittelt wird. Mittels dieses Schlüssels kann der Kunde dann die Ware wieder entschlüsseln. Da derselbe Schlüssel zur Verschlüsselung und zur Entschlüsselung verwendet wird, handelt es sich hierbei um ein sogenanntes symmetrisches Verschlüsselungsverfahren. Zur gegenseitigen Absicherung des Kunden und des Verkäufers sowie zur Sicherung des Schlüssels bei der Übermittlung wird hier ein äußerst aufwändiges und rechenintensives Verfahren vorgeschlagen, welches neben der Übersendung mehrerer kryptographischer Checksummen zusätzlich noch eine Signatur einschließt Dadurch wird zur Durchführung des Verfahrens auch noch die Dienstleistung eines Trust -Centers notwendig.

Zur allgemeinen Zahlung von Waren ist außerdem bekannt, dass der Verkäufer einen speziellen Servicebetreiber, welcher das Zahlungsgeschäft abwickelt, kontaktiert und dieser Servicebetreiber dann ein Mobilfunkgerät des Kunden anruft, welcher mittels seines Mobilfunkgeräts die Zahlung des zu zahlenden Betrags bestätigt. Nach Erhalt der Bestätigung erhält der Verkäufer vom Servicebetreiber eine entsprechende Mitteilung und gibt daraufhin die Ware heraus ("Kampfansage an Kreditkarten", Wirtschaftswoche 23.03.2000). Dieses Verfahren bietet den Vorteil, daß der Zahlungsvorgang nicht online sondern über ein zweites Netzsystem abgewickelt wird. Es eignet sich jedoch nicht zum Verschlüsseln der über das Internet zu übermittelnden digitalen Ware. Die Ware wird bei diesem Verfahren unverschlüsselt über das Internet übermittelt, so dass mit diesem Verfahren nicht sichergestellt ist, dass die Ware nicht zu unbefugten Dritten gelangt, die die Ware dann nutzen können.

Die WO 98 02852 A zeigt ein Schema zur bargeldlosen Bezahlung von aus dem Internet aufrufbaren Diensten über ein ISDN-Netz, bei der eine Autorisierung vom Lieferanten über einen weiteren ISDN-Kanal zur Verfügung gestellt wird.

Es ist Aufgabe der vorliegenden Erfindung, eine Alternative zu dem genannten Stand der Technik zu schaffen, mit der auf einfache und sichere Weise eine Absicherung von digitalen Waren beim Verkauf über ein Computer-Netzwerk möglich ist.

Diese Aufgabe wird durch ein Verfahren gemäß Patentanspruch 1 gelöst Die abhängigen Ansprüche enthalten vorteilhafte Weiterbildungen und Ausgestaltungen des erfindungsgemäßen Verfahrens.

Bei dem erfindungsgemäßen Verfahren wird die Ware unter Nutzung eines symmetrischen Verschlüsselungsverfahrens verschlüsselt und diese verschlüsselte Ware an einen Computer des Kunden übermittelt. Die Übersendung des Schlüssels erfolgt über einen davon völlig unabhängigen Weg, nämlich über ein Mobilfunknetz an ein mobiles Kommunikationsendgerät des Kunden. Bei dem Mobilfunknetz kann es sich um ein beliebiges Mobilfunknetz, beispielsweise GSM oder UMTS, handeln. Der Begriff "Mobilfunknetz" umfasst hierbei auch entsprechende Pager-Netze. Bei dem mobilen Kommunikationsendgerät handelt es sich beispielsweise um ein handelsübliches Mobilfunkgerät oder einen Pager.

Durch die Übertragung von Kryptogramm und Schlüssel auf verschiedenen Wegen ist eine außerordentlich hohe Sicherheit gewährleistet. Daher besteht die Möglichkeit, mit einem symmetrischen Algorithmus bei der Verschlüsselung der Waren zu arbeiten. Es können hierbei relativ einfache Session-Keys (TAN, Transaktionsnummer) verwendet werden, die nur einmal für eine Übermittlung benutzt werden. Durch die Verwendung eines symmetrischen Algorithmus mit einfachen Session-Keys sind die Rechenzeiten bei der Verschlüsselung bzw. Entschlüsselung gering.

Vorzugsweise erfolgt vor einem ersten Einkauf eine Registrierung des Kunden bei einem Servicebetreiber, wobei der Kunde ein Identifizierungsmerkmal, welches eindeutig mit dem mobilen Kommunikationsendgerät des Nutzers verknüpft ist, an den Servicebetreiber übermittelt. Bei diesem Identifizierungsmerkmal handelt es sich vorzugsweise um die Mobilfunknummer des Mobilfunkgeräts bzw. die Teilnehmernummer des Pagers oder eine andere Registriemummer, die diesen Geräten zugeordnet ist. Dem so registrierten Kunden wird dann vorzugsweise eine persönliche Identifizierungsnummer, d.h. eine PIN, zur Nutzung des Service zugeordnet Diese persönliche Identifizierungsnummer wird ebenfalls über das Mobilfunknetz an das mobile Kommunikationsendgerät übermittelt. Selbstverständlich kann die Übermittlung der PIN auch auf dem Postweg mittels eines PIN-Briefs erfolgen, sofern eine Identifizierung des Nutzers mit seiner Adresse eindeutig möglich ist. Eine eindeutige Identifizierung des Kunden mit seiner Adresse ist beispielsweise immer dann möglich, wenn der Servicebetreiber selbst der Mobilfunkbetreiber ist

Selbstverständlich kann anstatt einer separat übermittelten PIN des Servicebetreibers auch eine dem mobilen Kommunikationsendgerät ohnehin zugeordnete PIN, beispielsweise die PIN der SIMCard, verwendet werden. Dies bietet sich dann an, wenn dem Servicebetreiber diese PIN bekannt ist, insbesondere also wenn es sich um den Mobilfunkbetreiber handelt Die Verwendung einer zusätzlichen, separaten PIN zur Nutzung des Dienstes erhöht jedoch die Sicherheit, da für einen Missbrauch des Verfahrens dann nicht nur der unbefugte Besitz des Mobilfunkgerätes des Kunden sowie die Kenntnis der zugehörigen PIN des Kommunikationsendgeräts vorliegen muss, sondern der unbefugte Dritte außerdem noch die zusätzliche PIN des Servicebetreibers kennen muss.

Die Übermittlung der PIN an das mobile Kommunikationsendgerät kann als Text-Nachricht, zum Beispiel per SMS, erfolgen.

Bei einer bevorzugten Ausführungsform des Verfahrens muss sich der Kunde zunächst von einem Computer aus auf einem Computernetzwerk-Server des Servicebetreibers unter Übermittlung des bei der Registrierung angegebenen Identifizierungsmerkmals und/ oder der zugeordneten PIN einloggen. Der Servicebetreiber überprüft dann das angegebene Identifizierungs-Merkmal bzw. die PIN und schaltet den weiteren Service nur dann frei, wenn die Überprüfung erfolgreich war. Es erfolgt dann die Auswahl einer Ware durch den Kunden aus einem Warenangebot eines Verkäufers. Die ausgewählte Ware wird mittels des Schlüssels verschlüsselt und die verschlüsselte Ware an den Computer des Kunden übermittelt. Außerdem erfolgt eine Übermittlung des Schlüssels als Klartext an das mobile Kommunikationsendgerät des Kunden. Dieser kann dann die Ware mittels eines Entschlüsselungs-Algorithmus auf dem Computer unter Verwendung des übermittelten Schlüssels entschlüsseln.

Der Servicebetreiber muss hierbei nicht zwangsläufig identisch mit dem Verkäufer sein. Der Verkäufer und der Servicebetreiber sollten aber Vertragspartner sein, und der Server des Servicebetreibers muss , entsprechende Mittel aufweisen, um für den Kunden die ausgewählten Waren zu verschlüsseln und zum Herunterladen freizugeben oder um dem Verkäufer oder einem Server des Verkäufers mitzuteilen, dass es sich hierbei um einen ausgewiesenen, autorisierten Kunden handelt, dessen Daten dem Servicebetreiber bekannt sind.

Da sämtliche zur Bezahlung notwendigen Daten dem Servicebetreiber bekannt sind und sichergestellt ist, dass die heruntergeladene Ware aufgrund der Verschlüsselung nur von dem autorisierten Kunden, dem der Schlüssel übermittelt worden ist, genutzt werden kann, kann der zu zahlende Betrag vom Servicebetreiber nun problemlos offline in einem üblichen Lastschriftverfahren oder dergleichen (bspw. Kreditkarte o.ä.) eingezogen werden. Wenn Servicebetreiber und Verkäufer nicht identisch sind, erfolgt eine entsprechende Verrechnung.

Es kann auch vorgesehen sein, daß nach erfolgter Entschlüsselung durch den Computer des Nutzers eine Rückmeldung an den Servicebetreiber bzw. Verkäufer gegeben wird. In diesem Fall kann es auch vorgesehen sein, daß der zu zahlende Betrag vom Servicebetreiber erst nach dieser Rückmeldung eingezogen wird.

Bei einem besonders bevorzugten Verfahren wird die Ware vor dem Übermitteln auf den Computer des Kunden personalisiert. Diese Personalisierung erfolgt mit einer eindeutigen ID, zum Beispiel mittels eines sogenannten softwaremäßigen "Wasserzeichens". Somit ist die Ware auch nach der Entschlüsselung eindeutig als zu dem Kunden gehörige Ware identifizierbar. Diese Personalisierung kann vorzugsweise auf Basis des bei der Registrierung hinterlegten Identifizierungsmerkmals, beispielsweise der Mobilfunk-Nummer oder der Adresse des Nutzers, erfolgen. Durch die Personalisierung wird eine unbefugte Weitergabe der Ware an andere insoweit erschwert, als eine Feststellung der Herkunft jederzeit möglich ist.

Es versteht sich von selbst, dass der Käufer auch mehrere Waren gleichzeitig auswählen kann. Vorzugsweise werden diese Waren dann gemeinsam als Warenpaket mit einem Schlüssel verschlüsselt und auf den Computer des Kunden heruntergeladen, welcher dann das gesamte Warenpaket auf einmal entschlüsselt. Der Schlüssel wird vorzugsweise als Text-Nachricht, zum Beispiel als SMS, an das mobile Kommunikationsendgerät übermittelt, so dass der Kunde den Schlüssel problemlos von einem Display des Geräts ablesen kann. Selbstverständlich besteht auch die Möglichkeit, den Schlüssel als Sprach-Nachricht auf ein Mobilfunkgerät des Kunden zu übertragen.

Das zur Entschlüsselung benötigte Programm kann frei als Software herunterladbar zur Verfügung stehen. Es kann auch mit der Ware gemeinsam übermittelt werden, oder es wird dem Kunden bei der Registrierung übermittelt.

Das gesamte Verfahren der Registrierung der Kunden, der Übermittlung von Identifizierungsnummern sowie von Schlüsseln, der Überprüfung der Identifizierungsnümmern und sonstiger Identifizierungsmerkmale, der Verschlüsselung der Ware und des Herunterladens kann vollautomatisch über einen geeigneten Computer, beispielsweise den Server des Servicebetreibers, erfolgen, auf dem ein entsprechendes Computerprogramm implementiert ist

Die Erfindung wird im Folgenden noch einmal anhand eines konkreten Ausführungsbeispiels erläutert:

Vor einem ersten Einkauf wird zunächst eine Registrierung des neuen Kunden bei einem Servicebetreiber über das Internet durchgeführt. Die Identifizierung des neuen Nutzers erfolgt durch Eingabe einer Mobilfunk-Nummer des Kunden. Nachdem alle notwendigen Daten des Kunden registriert worden sind, wird dem Kunden automatisch eine PIN zur Nutzung des Service als SMS-Nachricht auf sein Mobilfunkgerät gesendet. Damit ist die Registrierung abgeschlossen.

Zum Nutzen des Service muss sich dann der Kunde an einem Computer auf dem Internet-Server des Betreibers mittels der PIN über einen sicheren Kanal (zum Beispiel SSL) einloggen. Die PIN wird dann beim Servicebetreiber überprüft und bei erfolgreicher Prüfung der weitere Service freigeschaltet.

Bei dem Computer kann es sich um einen beliebigen Computer handeln, an dem der Kunde gerade aktiv ist Es muss sich nicht um einen speziell registrierten Computer oder um einen Computer an einem speziell registrierten Anschluss handeln.

Anschließend kann sich der Kunde in dem gewünschten Internet-Shop, welcher Vertragspartner des Servicebetreibers ist, einen digitalen Warenkorb, bestehend aus beliebigen digitalen bzw. digitalisierbaren Waren wie Dokumenten, Büchern, Software oder Musik-Files, zusammenstellen. Der gesamte digitale Warenkorb wird dann mittels eines einmalig verwendeten Schlüssels für den Kunden verschlüsselt Der Schlüssel ist hierbei abhängig vom jeweiligen Kunden und kann beispielsweise unter Verwendung der PIN oder der sonstigen Kundendaten erzeugt werden. Bei der Verschlüsselung wird gleichzeitig die Ware mit einem eindeutigen Zeichen personalisiert Anschließend wird der verschlüsselte digitale Warenkorb auf den Computer des Kunden heruntergeladen.

Gleichzeitig oder nach Klärung der Zahlung wird der zur Verschlüsselung der Ware verwendete Schlüssel als Klartext-Schlüssel per SMS-Nachricht an den Kunden übermittelt. Dieser kann auf dem Display seines Mobilfunkgerätes den Schlüssel ablesen und unter Eingabe des Schlüssels die Ware wieder entschlüsseln, wozu der Kunde eine auf dem Computer installierte Software oder ein Applet verwenden kann.

Das erfindungsgemäße Verfahren ist überall dort einsetzbar, wo der Kunde mit seinem mobilen Kommunikationsendgerät erreichbar ist, d. h. bei Verwendung eines Mobilfunkgeräts auch international überall dort, wo Roaming möglich ist Es wird keine spezielle Infrastruktur, wie beispielsweise ein Sniart-Card-Terminal, am gerade vom Kunden benutzten Computer benötigt.

## Patentansprüche

1. Verfahren zum Sichern von digitalen Waren beim Verkauf über ein Computernetzwerk, bei dem die Ware unter Nutzung eines symmetrischen Verschlüsselungsverfahrens mit einem Schlüssel verschlüsselt wird, die verschlüsselte Ware an einen Computer eines Kunden über das Computernetzwerk übermittelt wird und dort mittels des Schlüssels wieder entschlüsselt wird, **dadurch gekennzeichnet, dass** der Schlüssel über ein Mobilfunknetz an ein mobiles Komraunikationsendgerät des Kunden übermittelt wird.

2. Verfahren nach Anspruch 1, **dadurch gekennzeichnet, dass** der Kunde vor einem ersten Einkauf unter Übermittlung eines Identuizierungsmerkmals, welches eindeutig mit dem mobilen Kommunikationsendgeräts des Nutzers verknüpft ist, bei einem Servicebetreiber registriert wird.

3. Verfahren nach Anspruch 2, **dadurch gekennzeichnet, dass** dem Kunden bei der Registrierung eine persönliche Identifizierungsnummer zugeordnet wird, die dem Kunden übermittelt wird.

4. Verfahren nach Anspruch 3, **dadurch gekennzeichnet, dass** die persönliche Identifizierungsnummer über ein Mobilfunknetz an das mobile Kommunikationsendgerät des Kunden oder mittels eines Briefs an den Kunden übermittelt wird.

5. Verfahren nach einem der Ansprüche 2 bis 4, **gekennzeichnet durch** folgende Schritte:
- Einloggen des Kunden von einem Computer aus auf einem Computernetzwerk-Server des Servicebetreibers unter Übermitteln des bei der Registrierung angegebenen Identifizierungsmerkmals und/oder der zugeordneten persönlichen Identifizierungsnummer
- Überprüfen des Identifizierungsmerkmals und/ oder der zugeordneten persönlichen Identifizierungsnummer
- Auswahl einer Ware **durch** den Kunden aus einem Warenangebot eines Verkäufers
- Verschlüsseln der ausgewählten Ware mittels des Schlüssels
- Übermitteln der verschlüsselten Ware auf den Computer des Kunden
- Übermitteln des Schlüssels als Klartext an das mobile Kommunikationsendgerät des Kunden
- Entschlüsseln der Ware mittels eines Entschlüsselungsalgorithmus auf dem Computer des Kunden unter Verwendung des übermittelten Schlüssels.

6. Verfahren nach einem der Ansprüche 1 bis 5, **dadurch gekennzeichnet, dass** mehrere Waren als ein Warenpaket gemeinsam mit einem Schlüssel verschlüsselt werden.

7. Verfahren nach einem der Ansprüche 1 bis 6, **dadurch gekennzeichnet, dass** die Ware vor dem Übermitteln auf den Computer des Kunden personalisiert wird.

8. Verfahren nach Anspruch 7, **dadurch gekennzeichnet, dass** die Personalisierung unter Nutzung des bei der Registrierung des Kunden an den Servicebetreiber übermittelten Identifizierungsmerkmals erfolgt.

9. Verfahren nach einem der Ansprüche 1 bis 8, **dadurch gekennzeichnet, dass** der Schlüssel ein einmalig verwendeter Schlüssel ist.

10. Verfahren nach einem der Ansprüche 1 bis 9, **dadurch gekennzeichnet, dass** der Schlüssel als Text- oder Sprachnachricht übermittelt wird.

11. Verfahren nach einem der Ansprüche 1 bis 10, **dadurch gekennzeichnet, dass** nach dem Entschlüsseln der Ware unter Verwendung des übermittelten Schlüssels beim Kunden eine Rückmeldung über die erfolgreiche Entschlüsselung an den Servicebetreiber gegeben wird.

12. Computerprogramm mit Programmcodemitteln, um alle Schritte gemäß einem der vorstehenden Ansprüche auszuführen, wenn das Programm auf einem Computer ausgeführt wird.

13. Computerprogramm mit Programmcodemitteln gemäß Anspruch 12, die auf einem computerlesbaren Datenspeicher gespeichert sind.

## Claims

1. A method for protecting digital goods upon sale over a computer network whereby the goods are encrypted with a key using a symmetric encryption method, the encrypted goods are transmitted over the computer network to a customer's computer and decrypted there by the key, **characterized in that** the key is transmitted to the customer's mobile communication terminal over a mobile phone network.

2. A method according to claim 1, **characterized in that** the customer is registered with a service operator before a first purchase and thereby transmits an identification feature that is uniquely linked with the user's mobile communication terminal.

3. A method according to claim 2, **characterized in that** at registration the customer is assigned a personal identification number which is transmitted to the customer.

4. A method according to claim 3, **characterized in that** the personal identification number is transmitted to the customer's mobile communication terminal over a mobile phone network or to the customer by means of a letter.

5. A method according to any of claims 2 to 4, **characterized by** the following steps:
- the customer logs into the service operator's computer network server from a computer while transmitting the identification feature stated at registration and/or the associated personal identification number,
- the identification feature and/or associated personal identification number is checked,
- the customer selects goods from a merchant's range of goods,
- the selected goods are encrypted by the key,
- the encrypted goods are transmitted to the customer's computer,
- the key is transmitted to the customer's mobile communication terminal as plaintext,
- the goods are decrypted by a decryption algorithm on the customer's computer using the transmitted key.

6. A method according to any of claims 1 to 5, **characterized in that** a plurality of goods are encrypted with one key jointly as a parcel.

7. A method according to any of claims 1 to 6, **characterized in that** the goods are personalized before transmission to the customer's computer.

8. A method according to claim 7, **characterized in that** personalization is effected using the identification feature transmitted to the service operator at registration of the customer.

9. A method according to any of claims 1 to 8, **characterized in that** the key is a one-time key.

10. A method according to any of claims 1 to 9, **characterized in that** the key is transmitted as a text or speech message.

11. A method according to any of claims 1 to 10, **characterized in that** after decryption of the goods by the customer using the transmitted key, an acknowledgement of successful decryption is sent to the service operator.

12. A computer program with program code means for executing all steps according to any of the above claims when the program is executed on a computer.

13. A computer program with program code means according to claim 12 that is stored in a computer-readable data memory.

## Revendications

1. Procédé destiné à sécuriser des produits numériques lors d'un achat via un réseau informatique, dans lequel le produit est chiffré avec une clef en utilisant un procédé de chiffrage à clé symétrique, puis le produit ainsi chiffré est transmis via le réseau informatique sur un ordinateur d'un client et y est déchiffré au moyen de la clé, **caractérisé en ce que** la clé est transmise via un réseau de radiotéléphonie vers un terminal de communication mobile du client.

2. Procédé selon la revendication 1, **caractérisé en ce que**, avant un premier achat, le client, s'enregistre auprès de l'exploitant du service par transmission d'une caractéristique d'identification combinée de manière univoque au terminal de communication mobile de l'utilisateur.

3. Procédé selon la revendication 2, **caractérisé en ce que**, au moment de l'enregistrement, est attribué au client un numéro d'identification personnel qui lui est transmis au client.

4. Procédé selon la revendication 3, **caractérisé en ce que** le numéro d'identification personnel est transmis soit par courrier au client soit, via un réseau de radiotéléphonie, au terminal de communication mobile du client.

5. Procédé selon l'une quelconque des revendications 2 à 4, **caractérisé par** les étapes suivantes :
- ouverture d'une session par le client à partir d'un ordinateur sur un serveur de réseau informatique de l'exploitant du service, moyennant la transmission de la caractéristique d'identification fournie au moment de l'enregistrement et/ou du numéro d'identification personnel attribué ;
- vérification de la caractéristique d'identification et/ou du numéro d'identification personnel attribué ;
- sélection d'un produit par le client dans une offre proposée par le vendeur ;
- chiffrement en un code du produit sélectionné ;
- transmission du produit codé vers l'ordinateur du client ;
- transmission du code en texte clair vers le terminal de communication mobile du client ;
- décodage du produit, au moyen de l'algorithme de déchiffrement, sur l'ordinateur du client moyennant l'utilisation du code transmis.

6. Procédé selon l'une quelconque des revendications 1 à 5, **caractérisé en ce que** plusieurs produits regroupés en un paquet sont chiffrés conjointement en un code.

7. Procédé selon l'une quelconque des revendications 1 à 6, **caractérisé en ce que** le produit est personnalisé avant transmission vers l'ordinateur du client.

8. Procédé selon la revendication 7, **caractérisé en ce que** la personnalisation est effectuée moyennant l'utilisation de la caractéristique d'identification transmise au moment de l'enregistrement du client auprès de l'exploitant du service.

9. Procédé selon l'une quelconque des revendications 1 à 8, **caractérisé en ce que** le code est un code utilisé une seule fois.

10. Procédé selon l'une quelconque des revendications 1 à 9, **caractérisé en ce que** le code est transmis sous forme de texte ou de message vocal.

11. Procédé selon l'une quelconque des revendications 1 à 10, **caractérisé en ce que**, après le décodage du produit chez le client moyennant l'utilisation du code transmis, un accusé de réception attestant le décodage du produit est envoyé à l'exploitant du service.

12. Programme informatique avec des moyens de codage programme, en vue de pouvoir exécuter toutes les étapes selon l'une des revendications précédentes, lorsque le programme est exécuté sur un ordinateur.

13. Programme informatique avec des moyens de codage programme selon la revendication 12, lesquels sont stockés dans une mémoire de données propre à être lue par l'ordinateur.
